(19) Europäisches Patentamt European Patent Office Office européen des brevets

(11) **EP 3 595 863 B2**

(12) **NEW EUROPEAN PATENT SPECIFICATION**

After opposition procedure

(45) Date of publication and mention
of the opposition decision:
**03.07.2024 Bulletin 2024/27**

(45) Mention of the grant of the patent:
**24.03.2021 Bulletin 2021/12**

(21) Application number: **18707328.3**

(22) Date of filing: **21.02.2018**

(51) International Patent Classification (IPC):
**B29C 55/26** *(2006.01)*  **F16L 9/12** *(2006.01)*
**B29K 23/00** *(2006.01)*

(52) Cooperative Patent Classification (CPC):
**B29C 55/26; B29K 2023/065**

(86) International application number:
**PCT/EP2018/054292**

(87) International publication number:
**WO 2018/166771 (20.09.2018 Gazette 2018/38)**

(54) **PROCESS FOR PRODUCING PIPE BY BIAXIAL ELONGATION**

VERFAHREN ZUR HERSTELLUNG EINES ROHRS DURCH BIAXIALE DEHNUNG

PROCÉDÉ DE PRODUCTION DE TUYAU PAR ALLONGEMENT BIAXIAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.03.2017 EP 17161528**

(43) Date of publication of application:
**22.01.2020 Bulletin 2020/04**

(73) Proprietor: **SABIC Global Technologies B.V.**
**4612 PX Bergen op Zoom (NL)**

(72) Inventors:
• **TARAIYA, Ajay,Kumar**
**6160 GA Geleen (NL)**
• **SOLIMAN, Maria**
**6160 GA Geleen (NL)**

(74) Representative: **Sabic Intellectual Property Group**
**Sabic Intellectual Property Department**
**P.O. Box 3008**
**6160 GA Geleen (NL)**

(56) References cited:
WO-A1-93/19924      WO-A1-97/19807
WO-A1-03/033586      WO-A1-2016/005044
CA-A1- 2 457 430      JP-A- H0 994 867
US-A- 5 338 589      US-A1- 2008 312 380
US-A1- 2015 025 195      US-B1- 6 770 341

• **Dow Us: "The Power of Plastic HDPE Replaces Carbon Steel in Safety-Related Pipe System at AmerenUE Nuclear Plant", , 1 October 2009 (2009-10-01), pages 1-4, XP055377912, USA Retrieved from the Internet: URL:http://www.dow.com/webapps/include/Get Doc.aspx?filepath=plasticpipes/pdfs/noreg/ 782-02001.pdf [retrieved on 2017-06-01]**
• **Translation of D1**
• **Anonymous: "Polyethylene Pipe Biaxial Stretching Technology, Construction Industry, Light Industry Machinery", Tappi Journal, no. 1, 1 December 1991 (1991-12-01), pages 41-49,**
• **Translation of E7**

EP 3 595 863 B2

**Description**

The present invention relates to process for a producing a pipe by a biaxial elongation of a polyethylene composition. The invention further relates to a pipe obtainable by such process.

It is known to improve the physical and mechanical properties of a polymer material by orienting the material. In many cases, orienting a material to improve a property in one direction leads to worsening of the same property in the direction perpendicular to the direction of orientation. In order to adapt the properties in both directions, a biaxial orientation of the material may be applied. The biaxial orientation means that the polymer material is oriented in two directions, perpendicular to one another. A pipe can be oriented in the axial direction and peripheral direction (hoop direction) to improve properties such as tensile strength.

US5910346 describes process for a producing a pipe by a biaxial elongation of a polymer composition. The thickness of the walls of polyolefin product pipe is from 0.1 to 5.0 mm. For polyethylenes, the preferred axial draw ratio is at least 2 and preferably greater than 3. In one of the examples, HDPE 00-240 is biaxially drawn from a billet having an outer diameter of 62.0 mm at an axial draw ratio of 3.8, inner hoop draw ratio of 2.7 and outer hoop draw ratio of 1.03. In this example, the average hoop draw ratio and the wall thickness can be calculated to be 1.45 and 3.58 mm, respectively. HDPE 00-240 is a unimodal ethylene-butylene copolymer.

JP09-94867 discloses an extrusion molding of a hollow molded article made of a thermoplastic resin, by biaxial drawing using a tapered mold.. The inner surface temperature of the parison is kept at least at its melting temperature.

CA2457430 describes the need for new polyethylene materials which offer an advantageously balanced combination of thermal, mechanical and processing properties to be used in pipe production. CA2457430 discloses a polyethylene multimodal resin having a multimodal molecular weight distribution.

Pipes have different applications depending on their outer diameter and thickness. Pipes with a low wall thickness are sensitive to outside damage that can lead to failure due to any point load. Pipes with a high wall thickness are required in applications in severe environments, for example for use as a buried pipe.

In "The Power of Plastic HDPE Replaces Carbon Steel in Safety-Related Pipe System at AmerenUE Nuclear Plant", (URL:http://www.dow.com/webapps/include/GetDoc.aspx?filepath=plasticpipes/pdfs/no reg/782-02001.pdf) bimodal HDPE pipes with a diameter of 36 inches and a thickness of 4 inches are for example disclosed.

One of the most important properties for pipes is the resistance to crack propagation. Resistance to crack propagation can be determined according to ISO 13479 "Polyolefin pipes for the conveyance of fluids - Determination of resistance to crack propagation - Test method for slow crack growth on notched pipes (notch test)". The test simulates slow crack growth and record time to failure on notched pipes. These pipes are tested at 80°C under constant internal test stress of 4.6 MPa.

It is an objective of the present invention to provide a stable process for producing a biaxially oriented pipe with good resistance to crack propagation.

The present invention is directed at a process for producing a biaxially oriented pipe in accordance with claim 1.

The terms "pipe" and "tube" are herein understood as a hollow elongated article, which may have a cross section of various shapes. The cross section may e.g. be circular, elliptical, square, rectangular or triangular. The term "diameter" is herein understood as the largest dimension of the cross section.

It was surprisingly found that biaxial drawing with low draw ratios, especially a low axial draw ratio, leads to a good resistance to crack propagation. The low axial draw ratio is made possible according to the invention by the use of a bimodal HDPE. Upon solid-state drawing, semi-crystalline polymers such as polyethylene form a neck. This neck has to be drawn out until a product with a uniform thickness is obtained. Therefore the production of a biaxially drawn pipe requires a certain minimum draw ratio. A unimodal HDPE requires a relatively high draw ratio for drawing out the neck. According to the invention, a bimodal or multimodal HDPE composition is used which allows drawing at a low axial draw ratio while necking is prevented. Accordingly, the present invention provides a stable, neck-free production of a pipe having a good time-to-failure property.

The process may be performed as a continuous process or a batch-wise process. A continuous process is herein understood as a process wherein the polyethylene composition is continuously fed for the tube making step a), while the drawing step b) is continuously performed.

Applying a low axial draw ratio has an advantage regarding the ease of production of the pipe in particular when the process is a continuous process. For the continuous production of biaxially oriented pipes with certain dimensions, a tube of a certain outer diameter and inner diameter is provided depending on the draw ratio to be applied. The tube passes through a temperature conditioning unit so that it reaches a uniform stretching temperature and subsequently pulled over a conical expanding mandrel to attain orientation in both hoop and axial direction. This conical mandrel is supported on a rod, which is anchored through the cross-head die of the tube melt extruder. If the wall of the tube is too thick, it will take considerable length of temperature conditioning unit to achieve the desired drawing temperature and length of the mandrel supporting rod. If the inner diameter of the starting tube is too small, it becomes increasingly difficult and in certain cases impossible to hold mandrel supporting rod in place.

Hence, it is advantageous to be able to use a tube with a thickness which is not too large and an inner diameter which is not too small. It is a further advantage of the invention that a low axial draw ratio is used, since a tube with a relatively small wall thickness and a large internal diameter can be used.

The relationship between the pipe dimensions, draw ratios and tube dimensions are given in the table below.

| POD mm | PID mm | Product wall mm | Axial DR | Av. Hoop DR | Tube OD mm | Tube ID mm | Tube wall mm |
|--------|--------|-----------------|----------|-------------|------------|------------|--------------|
| 63 | 51.4 | 5.8 | 4 | 1.4 | 73.3 | 8.4 | 32.5 |
| 63 | 51.4 | 5.8 | 3 | 1.4 | 65.2 | 16.5 | 24.4 |
| 63 | 51.4 | 5.8 | 2 | 1.4 | 57.1 | 24.6 | 16.2 |
| 63 | 51.4 | 5.8 | 1.5 | 1.4 | 53.0 | 28.7 | 12.2 |
| 63 | 51.4 | 5.8 | 1.2 | 1.4 | 50.6 | 31.1 | 9.7 |

For obtaining a pipe with desired dimensions, applying an axial draw ratio of 4 will require a starting tube with a very thick wall and a very small inner diameter, which may make the production of such pipe impossible. As the axial draw ratio is lowered, the processing of the starting tube becomes easier by the lower thickness and the higher inner diameter.

According to the process of the invention, a relatively large pipe having an outer diameter of at least 60 mm or a relatively small pipe having an outer diameter of less than 60 mm can be obtained. For obtaining the relatively small pipe, the draw ratio is selected to be very small for obtaining a good time-to-failure property. For obtaining the relatively large pipe, the upper limit of the draw ratio is higher than for the relatively small pipe, but the tube dimensions are selected to result in a relatively thick pipe.

For obtaining a biaxially oriented pipe having an outer diameter of at least 60 mm, the axial draw ratio is selected to be 1.1 to 3.2 and an average hoop draw ratio is selected to be 1.1 to 1.6. The wall thickness is at least 5.5 mm. Preferably, the axial draw ratio is at least 1.2, at least 1.3, at least 1.5 or at least 1.8 and/or at most 3.0, at most 2.8 or at most 2.5. Preferably, the average hoop draw ratio is at least 1.2 or at least 1.3. Preferably, the outer diameter is 60 mm to 2000 mm, for example 60 mm to 150 mm or 150 mm to 2000 mm. Preferably, the wall thickness is 5.5 mm to 100 mm, for example 5.5 to 15 mm or 15 mm to 100 mm. In some embodiments, the biaxially oriented pipe according to the present invention has an outer diameter of 60 mm to 150 mm and a wall thickness of 5.5 to 15 mm.

For obtaining a biaxially oriented pipe having an outer diameter of less than 60 mm, the axial draw ratio is selected to be 1.1 to 1.7 and an average hoop draw ratio is selected to be 1.1 to 1.6. Preferably, the axial draw ratio is at least 1.2, at least 1.3 or at least 1.5. Preferably, the average hoop draw ratio is at least 1.2 or at least 1.3. The outer diameter is 10 mm to 40 mm. The wall thickness is 1.5 mm to 5 mm. In accordance with the invention the biaxially oriented pipe has an outer diameter of 10 mm to 40 mm and a wall thickness of 1.5 mm to 5 mm.

Polyethylene composition

The polyethylene composition comprises HDPE. In some embodiments, the polyethylene composition comprises a further polyethylene other than HDPE. The further polyethylene may e.g. be linear low-density polyethylene (LLDPE), low-density polyethylene (LDPE) or a combination of LLDPE and LDPE. Preferably, the further polyethylene is LLDPE or a combination of LLDPE and LDPE. More preferably, the further polyethylene is LLDPE. In case the further polyethylene is a combination of LLDPE and LDPE, the weight ratio of LLDPE to LDPE may e.g. be at least 0.1, for example at least 0.2 or at least 0.3 and at most 10, for example at most 5 or at most 3. Preferably, the weight ratio of LLDPE to LDPE is at least 1, for example 2 to 10. Preferably, the weight ratio of HDPE to the further polyethylene in the polyethylene composition is more than 1.

In some embodiments, the polyethylene composition essentially comprises no further polyethylene other than HDPE. The amount of HDPE in polyethylene in the polyethylene composition may be at least 95 wt%, at least 98 wt%, at least 99 wt% or 100 wt%.

The polyethylene composition may comprise components other than HDPE and the optional further polyethylene, such as additives and fillers.

Examples of the additives include nucleating agents; stabilisers, e.g. heat stabilisers, anti-oxidants, UV stabilizers; colorants, like pigments and dyes; clarifiers; surface tension modifiers; lubricants; flame-retardants; mould-release agents; flow improving agents; plasticizers; anti-static agents; external elastomeric impact modifiers; blowing agents; and/or components that enhance interfacial bonding between polymer and filler, such as a maleated polyethylene. The amount of the additives is typically 0 to 5 wt%, for example 1 to 3 wt%, with respect to the total composition.

Examples of fillers include glass fibers, talc, mica, nanoclay. The amount of fillers is typically 0 to 40 wt%, for example 5 to 30 wt% or 10 to 25 wt%, with respect to the total composition.

Accordingly, in some embodiments, the composition further comprises 0 to 5 wt% of additives and 0 to 40 wt% of fillers.

The polyethylene composition may be obtained by melt-mixing HDPE and the optional further polyethylene, optionally with any other optional components.

Preferably, the total amount of HDPE, the optional further polyethylene and the optional additives and the optional fillers is 100 wt% with respect to the total polyethylene composition.

In accordance with the invention the amount of HDPE with respect to polyethylene present in the polyethylene composition is at least 95 wt.%, at least 98 wt.%, at least 99 wt.% or 100 wt.%.

Preferably, the polyethylene composition has a Melt Flow Rate of 0.1-4 g/10 min, more preferably 0.1-1g/10min, measured according to ISO1133-1:2011 (190 ºC/5 kg).

The production processes of HDPE, LLDPE and LDPE are summarised in Handbook of Polyethylene by Andrew Peacock (2000; Dekker; ISBN 0824795466) at pages 43-66.

HDPE

The HDPE is bimodal or multimodal. Such HDPEs have properties suitable for producing a pipe. Furthermore, such HDPEs can be drawn at a low draw ratio without causing the necking problem.

It is understood that a bimodal HDPE has a molecular weight distribution having two peaks corresponding to the first median and the second median of the respective stages in the polymerization. It is similarly understood that a multimodal HDPE has a molecular weight distribution having multiple peaks corresponding to the first median, the second median and one or more further medians of the respective stages in the polymerization.

HDPE may be an ethylene homopolymer or may comprise a comonomer, for example butene or hexene.

Preferably, the HDPE has a density of 940-960 kg/m$^3$, more preferably 940-955 kg/m$^3$, measured according to ISO1183.

Preferably, the HDPE has a Melt Flow Rate of 0.1-4 g/10 min, more preferably 0.1-1 g/10min, measured according to ISO1133-1:2011 (190 ºC/5 kg).

In some embodiments, the composition comprises a compound comprising the HDPE and a colorant, wherein the compound has a density of 947-965 kg/m$^3$ measured according to ISO1183. The colorant may e.g. be carbon black or a pigment having a color of e.g. black, blue or orange. The amount of the colorant is typically 1-5 wt%, more typically 2-2.5 wt%, with respect to the compound comprising the HDPE and the colorant, the rest typically being the HDPE.

The HDPE can be produced by using low pressure polymerisation processes. For example, pipe materials of the performance class PE 80 and PE 100 are known, which are generally produced in cascade plants by a so called bimodal or multimodal process. The production processes for bimodal HDPE are summarised at pages 16-20 of "PE 100 Pipe systems" (edited by Bromstrup; second edition, ISBN 3-8027-2728-2). Suitable low pressure processes are slurry cascade of stirred reactors, slurry cascade of loop reactors and a combination of different processes such as slurry loop gas phase reactor. It is also possible to use a multimodal polyethylene, preferably trimodal polyethylene, as described for example in WO2007003530, as high density polyethylene pipe material.

The performance classes PE 80 and PE 100 are discussed at pages 35- 42 of "PE 100 Pipe systems" (edited by Bromstrup; second edition, ISBN 3-8027-2728- 2). The quality test methods are described at pages 51-62 of "PE 100 Pipe systems".

The production of bimodal high density polyethylene (HDPE) via a low pressure slurry process is described by Alt et al. in "Bimodal polyethylene-Interplay of catalyst and process" (Macromol.Symp. 2001, 163, 135-143). In a two stage cascade process the reactors may be fed continuously with a mixture of monomers, hydrogen, catalyst/cocatalyst and hexane recycled from the process. In the reactors, polymerisation of ethylene occurs as an exothermic reaction at pressures in the range between for example 0.5 MPa (5 bar) and 1 MPa (10 bar) and at temperatures in the range between for example 75 ºC and 85 ºC. The heat from the polymerisation reaction is removed by means of cooling water. The characteristics of the polyethylene are determined amongst others by the catalyst system and by the applied concentrations of catalyst, co monomer and hydrogen.

The concept of the two stage cascade process is elucidated at pages 137-138 by Alt et al. "Bimodal polyethylene-Interplay of catalyst and process" (Macromol.Symp. 2001, 163). The reactors are set up in cascade with different conditions in each reactor including low hydrogen content in the second reactor. This allows for the production of HDPE with a bimodal molecular mass distribution and defined co monomer content in the polyethylene chains in each reactor.

Preferred examples of the HDPE include a bimodal PE 80, a bimodal PE 100 and a multimodal HDPE. PE 80 is a PE material with an MRS (minimum required strength after 50 years for water at 20 degrees Celsius) of 8 MPa and PE 100 is a PE material with an MRS of 10 MPa. The pipe classification is elucidated at page 35 of "PE 100 Pipe systems" (edited by Bromstrup; second edition, ISBN 3-8027-2728-2).

Preferably, the HDPE or the compound comprising the HDPE and the colorant has one or more of, preferably all of, the following characteristics:

- Tensile modulus of 500-1400 MPa, preferably 700-1200 MPa (according to ISO 527-2)
- Yield stress of 15-32 MPa, preferably 18-28 MPa (according to ISO 527-2)
- Full Notch Creep Test (FNCT): 100 - 20000 h (according to ISO 16770 @ 80 degrees centigrade / 4 MPa)
- Charpy of 10-35 $\underline{o}$C @ 23 $\underline{o}$C, preferably 14-30 $\underline{o}$C (according to ISO 1 eA).

LLDPE

The polyethylene composition may comprise LLDPE.

The technologies suitable for the LLDPE manufacture include gas-phase fluidized-bed polymerization, polymerization in solution, polymerization in a polymer melt under very high ethylene pressure, and slurry polymerization.

The LLDPE comprises ethylene and a C3-C10 alpha-olefin comonomer (ethylene-alpha olefin copolymer). Suitable alpha-olefin comonomers include 1-butene, 1-hexene, 4-methyl pentene and 1-octene. The preferred co monomer is 1-hexene. Preferably, the alpha-olefin co monomer is present in an amount of about 5 to about 20 percent by weight of the ethylene-alpha olefin copolymer, more preferably an amount of from about 7 to about 15 percent by weight of the ethylene-alpha olefin copolymer.

Preferably, the LLDPE has a density of 900-948 kg/m$^3$, more preferably 915-935kg/m$^3$, more preferably 920-935 kg/m$^3$, determined according to ISO1872-2.

Preferably, the LLDPE has a Melt Flow Rate of 0.1-3.0 g/10min, more preferably 0.3-3.0 g/10min, determined according to ISO1133-1:2011 (190°C/2.16kg).

LDPE

The polyethylene composition may comprise LDPE.

The LDPE may be produced by use of autoclave high pressure technology and by tubular reactor technology.

LDPE may be an ethylene homopolymer or may comprise a comonomer, for example butene or hexene.

Preferably, the LDPE has a density of 916-940 kg/m$^3$, more preferably 920-935 kg/m$^3$, determined according to ISO1872-2.

Preferably, the LDPE has a Melt Flow Rate of 0.1-3.0 g/10min, more preferably 0.3-3.0 g/10min, determined according to ISO1133-1:2011 (190°C/2.16kg).

Process steps

The polyethylene composition may be formed into a tube (step a) by any known method, such as extrusion or injection moulding. The biaxial elongation (step b) may be performed by any known method.

Methods for forming the polyethylene composition into a tube and the biaxial elongation of the tube are described in US6325959:

A conventional plant for extrusion of plastic pipes comprises an extruder, a nozzle, a calibrating device, cooling equipment, a pulling device, and a device for cutting or for coiling-up the pipe. By the molten mass of polymer on its way from the extruder through the nozzle and up to calibration, cooling and finished pipe being subjected to shear and elongation etc. in the axial direction of the pipe, an essentially uniaxial orientation of the pipe in its axial direction will be obtained. A further reason that contributes to the orientation of the polymer material in the direction of material flow is that the pipe can be subjected to tension in connection with the manufacture.

To achieve biaxial orientation, this plant can be supplemented, downstream of the pulling device, with a device for temperature control of the pipe to a temperature that is suitable for biaxial orientation of the pipe, an orienting device, a calibrating device, a cooling device, and a pulling device which supplies the biaxially oriented pipe to a cutting device or coiler.

The biaxial orientation can also be carried out in direct connection with the first calibration after extrusion, in which case the above-described supplementary equipment succeeds the first calibrating device.

The biaxial orientation of the pipe can be carried out in various ways, for instance mechanically by means of an internal mandrel, or by an internal pressurised fluid, such as air or water or the like. A further method is the orienting of the pipe by means of rollers, for instance by arranging the pipe on a mandrel and rotating the mandrel and the pipe relative to one or more pressure rollers engaging the pipe, or via internally arranged pressure rollers that are rotated relative to the pipe against an externally arranged mould or calibrating device.

Conditions for step b)

In accordance with the invention step b) is performed at a drawing temperature which is 1 to 30 $\underline{o}$C lower than the melting point of the polyethylene composition, for example 2 to 20 $\underline{o}$C or 3 to 10 $\underline{o}$C lower than the melting point of the polyethylene composition. When more than one melting point can be measured for the polyethylene composition, step b) is preferably performed at a drawing temperature which is 1 to 30 $\underline{o}$C lower than the highest melting point of the polyethylene composition, for example 2 to 20 $\underline{o}$C or 3 to 10 $\underline{o}$C lower than the highest melting point of the polyethylene composition.

In some embodiments, step b) may be performed at a drawing temperature which is 1 to 30 $\underline{o}$C lower than the melting point of the HDPE, for example 2 to 20 $\underline{o}$C or 3 to 10 $\underline{o}$C lower than the melting point of the HDPE.

In some embodiments, step b) is performed at a drawing temperature of 115-123 $\underline{o}$C.

Step b) is performed at a certain axial draw ratio and a certain average hoop draw ratio as described above.

The axial draw ratio of the drawn pipe is defined as the ratio of the cross-sectional area of the starting isotropic tube to that of the biaxially oriented pipe (i.e. product), that is,

$$\lambda_{\text{axial}} = \frac{(\textbf{Tube OD})^2 - (\textbf{Tube ID})^2}{(\textbf{Product OD})^2 - (\textbf{Product ID})^2}$$

OD stands for outer diameter and ID stands for inner diameter.

The average hoop draw ratio can be defined as:

$$\lambda_{\text{average hoop}} = \frac{\textbf{Total Draw Ratio } \lambda_{\text{Total}}}{\textbf{Axial Draw Ratio } \lambda_{\text{axial}}}$$

Where

$$\lambda_{\text{Total}} = \frac{\textbf{Tube Wall Thickness}}{\textbf{Product Wall Thickness}}$$

The relatively low draw ratios were surprisingly found to improve the time-to-failure property.

Biaxially oriented pipe

The invention also relates to the biaxially oriented pipe obtained or obtainable by the process according to the invention.

The biaxially oriented pipe according to the present invention may be a pressure pipe or a non-pressure pipe. The preferred pipe is a pressure pipe.

Examples of suitable biaxially oriented pipes according to the invention have the following outer diameter and inner diameter and wall thickness.

| Outer diameter (mm) | Inner diameter (mm) | Wall thickness (mm) |
|---|---|---|
| 110 | 90 | 10.0 |
| 90 | 73.6 | 8.2 |
| 75 | 61.4 | 6.8 |
| 63 | 51.4 | 5.8 |
| 32 | 26 | 3.0 |

It is noted that the invention relates to all possible combinations of features described herein, preferred in particular are those combinations of features that are present in the claims. It will therefore be appreciated that all combinations of features relating to the composition according to the invention; all combinations of features relating to the process according to the invention and all combinations of features relating to the composition according to the invention and features relating to the process according to the invention are described herein.

It is further noted that the term 'comprising' does not exclude the presence of other elements. However, it is also to be understood that a description on a product/composition comprising certain components also discloses a product/composition consisting of these components. The product/composition consisting of these components may be advantageous in that it offers a simpler, more economical process for the preparation of the product/composition. Similarly, it is also to be understood that a description on a process comprising certain steps also discloses a process consisting of these steps. The process consisting of these steps may be advantageous in that it offers a simpler, more economical process.

When values are mentioned for a lower limit and an upper limit for a parameter, ranges made by the combinations of the values of the lower limit and the values of the upper limit are also understood to be disclosed.

The invention is now elucidated by way of the following examples, without however being limited thereto.

Materials:

HDPE: SABIC grade Vestolen A 6060R having a density of 959 kg/m$^3$ (black compound density) and MFR 5kg/190 ºC of 0.3 g/10 minutes. Bimodal PE.

Procedure:

HDPE was made into granules using twin screw extruder. Processing temperature and screw profile were of standard polyethylene compounding.

These compounded granules were used to produce thick tubular profiles of approximate dimensions of an outer diameter of about 60 mm and an inner diameter of about 24 mm. These thick tubes were drawn over an expanding conical mandrel of exit diameter of 61-65 mm and semi angle 15 degree at temperature of 120°C at a draw speed of 100 mm/min. Axial draw ratio was varied as summarized in Table 1 and the average hoop draw ratio was 1.4.

Table 1

| Ex | Mandrel dia (mm) | Tube OD (mm) | Tube ID (mm) | Tube wall (mm) | Product OD (mm) | Product ID (mm) | Product wall (mm) | Axial Draw Ratio | Av Hoop Draw Ratio |
|---|---|---|---|---|---|---|---|---|---|
| Isotropic | - | 63 | 51.4 | 5.8 | 63 | 51.4 | 5.8 | 1 | 1 |
| Ex 1 | 61 | 60 | 24 | 18 | 63.8 | 51 | 6.4 | 2 | 1.4 |
| Ex 2 | 63 | 61 | 24.6 | 18.2 | 63.2 | 54.5 | 4.35 | 3 | 1.4 |
| CEx 3 | 65 | 61 | 24.6 | 18.2 | 63.5 | 57 | 3.25 | 4 | 1.4 |

The time-to-failure of the pipes so obtained was measured according to ISO 13479, as well as of the 'isotropic pipe'. Three pipe samples were tested for each example.

Table 2

| Sample | Test temperature [°C] | Test stress [MPa] | Time-to-failure [h] |
|---|---|---|---|
| Isotropic | 80 | 4.6 | 644.8 |
| | | | 752.6 |
| | | | 757 |
| Ex 1 | 80 | 4.6 | > 16789 stopped |
| | | | > 16789 stopped |
| | | | > 16789 stopped |
| Ex 2 | 80 | 4.6 | 4659.8 |
| | | | > 17171 stopped |
| | | | > 17171 stopped |

(continued)

| Sample | Test temperature | Test stress | Time-to-failure |
|--------|------------------|-------------|-----------------|
|        | [°C]             | [MPa]       | [h]             |
|        |                  |             | 2397.5          |
| CEx 3  | 80               | 4.6         | 2581.8          |
|        |                  |             | 3491            |

The sample 'Isotropic' was made from the same material as Ex 1, Ex 2 and CEx 3 into a pipe having an outer diameter of 63 mm and an inner diameter of 51.4 mm by an extrusion without the stretching step.

The pipes with low axial draw ratio showed a better resistance to crack propagation.

**Claims**

1. A process for producing a biaxially oriented pipe, comprising the steps of:

   a) forming a polyethylene composition into a tube, wherein the polyethylene composition comprises a bimodal or a multimodal high-density polyethylene (HDPE) and
   b) stretching the tube of step a) in the axial direction and in the peripheral direction to obtain the biaxially oriented pipe,

   wherein step b) is performed at an axial draw ratio of 1.1 to 3.2 and an average hoop draw ratio of 1.1 to 1.6 and the obtained biaxially oriented pipe has an outer diameter of at least 60 mm and a wall thickness of at least 5.5 mm or
   step b) is performed at an axial draw ratio of 1.1 to 1.7 and an average hoop draw ratio of 1.1 to 1.6 and the obtained biaxially oriented pipe has an outer diameter of less than 60 mm, wherein the biaxially oriented pipe has an outer diameter of 10 to 40 mm and a wall thickness of 1.5 to 5 mm, and
   wherein step b) is performed at a drawing temperature which is 1 to 30 °C lower than the melting point of the polyethylene composition,
   wherein the amount of HDPE with respect to polyethylene present in the polyethylene composition is at least 95 wt%, at least 98 wt%, at least 99 wt% or 100 wt%

2. The process according to claim 1, wherein the outer diameter of the biaxially oriented pipe is at least 60 mm and the axial draw ratio is at least 1.2, at least 1.3, at least 1.5 or at least 1.8 and/or at most 3.0, at most 2.8 or at most 2.5.

3. The process according to claim 1 or 2, wherein the outer diameter of the biaxially oriented pipe is 60 to 150 mm and a wall thickness of 5.5 to 15 mm.

4. The process according to claim 1, wherein the outer diameter of the biaxially oriented pipe is less than 60 mm and the axial draw ratio is at least 1.2, at least 1.3 or at least 1.5.

5. The process according to any one of the preceding claims, wherein the HDPE has a density of 940-960 kg/m³ measured according to ISO1183 and/or a Melt Flow Rate of 0.1 - 4 g/10 min, more preferably 0.1 - 1 g/10min, measured according to ISO1133-1:2011 (190 °C/5 kg).

6. The process according to any one of the preceding claims, wherein the polyethylene composition has a Melt Flow Rate of 0.1 - 4 g/10 min, more preferably 0.1 - 1 g/10 min, measured according to ISO1133-1 :2011 (190 °C/5 kg).

7. The process according to any one of the preceding claims, wherein the composition further comprises 0 to 5 wt% of additives and 0 to 40 wt% of fillers.

8. The process according to any one of the preceding claims, wherein step b) is performed at a drawing temperature of 115 - 123 °C.

9. The process according to any one of the preceding claims, wherein the process is a continuous process.

**10.** The biaxially oriented pipe obtained or obtainable by the process according to any one of the preceding claims.

**Patentansprüche**

**1.** Verfahren zum Herstellen eines biaxial ausgerichteten Rohrs, umfassend die Schritte:

a) Formen einer Polyethylenzusammensetzung zu einer Röhre, wobei die Polyethylenzusammensetzung ein bimodales oder multimodales Polyethylen hoher Dichte (HDPE) umfasst, und
b) Strecken der Röhre von Schritt a) in axialer Richtung und in der Umfangsrichtung, um das biaxial ausgerichtete Rohr zu erhalten,

wobei Schritt b) bei einem axialen Ziehverhältnis von 1,1 bis 3,2 und einem durchschnittlichen Umfang-Zieh-Verhältnis von 1,1 bis 1,6 durchgeführt wird und das erhaltene biaxial ausgerichtete Rohr einen Außendurchmesser von mindestens 60 mm und eine Wandstärke von mindestens 5,5 mm aufweist, oder Schritt b) bei einem axialen Ziehverhältnis von 1,1 bis 1,7 und einem durchschnittlichen Umfang-Zieh-Verhältnis von 1,1 bis 1,6 durchgeführt wird und das erhaltene biaxial ausgerichtete Rohr einen Außendurchmesser von weniger als 60 mm aufweist, wobei das biaxial ausgerichtete Rohr einen Außendurchmesser von 10 bis 40 mm und eine Wandstärke von 1,5 bis 5 mm aufweist, und wobei Schritt b) bei einer Ziehtemperatur durchgeführt wird, die 1 bis 30 °C niedriger ist als der Schmelzpunkt der Polyethylenzusammensetzung, wobei die Menge an HDPE in Bezug auf in der Polyethylenzusammensetzung vorhandenes Polyethylen mindestens 95 Gew.-%, mindestens 98 Gew.-%, mindestens 99 Gew.-% oder 100 Gew.-% beträgt.

**2.** Verfahren nach Anspruch 1, wobei der Außendurchmesser des biaxial ausgerichteten Rohrs mindestens 60 mm beträgt und das axiale Ziehverhältnis mindestens 1,2, mindestens 1,3, mindestens 1,5 oder mindestens 1,8 und/oder höchstens 3,0, höchstens 2,8 oder höchstens 2,5 beträgt.

**3.** Verfahren nach Anspruch 1 oder 2, wobei der Außendurchmesser des biaxial ausgerichteten Rohrs 60 bis 150 mm beträgt und eine Wandstärke von 5,5 bis 15 mm vorliegt.

**4.** Verfahren nach Anspruch 1, wobei der Außendurchmesser des biaxial ausgerichteten Rohrs weniger als 60 mm beträgt und das axiale Ziehverhältnis mindestens 1,2, mindestens 1,3 oder mindestens 1,5 beträgt.

**5.** Verfahren nach einem der vorhergehenden Ansprüche, wobei das HDPE eine Dichte von 940-960 kg/m3, gemessen gemäß ISO1183, und/oder eine Schmelzflussrate von 0,1-4 g/10 Min., bevorzugter 0,1-1 g/10 Min., gemessen nach ISO1133-1:2011 (190 °C/5 kg), aufweist.

**6.** Verfahren nach einem der vorhergehenden Ansprüche, wobei die Polyethylenzusammensetzung eine Schmelzflussrate von 0,1-4 g/10 Min., bevorzugter 0,1-1 g/10 Min., gemessen nach ISO1133-1:2011 (190 °C/5 kg), aufweist.

**7.** Verfahren nach einem der vorhergehenden Ansprüche, wobei die Zusammensetzung ferner 0 bis 5 Gew.-% Additive und 0 bis 40 Gew.-% Füllstoffe umfasst.

**8.** Verfahren nach einem der vorhergehenden Ansprüche, wobei Schritt b) bei einer Ziehtemperatur von 115 bis 123 °C durchgeführt wird.

**9.** Verfahren nach einem der vorhergehenden Ansprüche, wobei es sich bei dem Verfahren um ein kontinuierliches Verfahren handelt.

**10.** Biaxial ausgerichtetes Rohr, erhalten oder erhältlich durch das Verfahren nach einem der vorhergehenden Ansprüche.

**Revendications**

**1.** Procédé de production d'un tuyau à orientation biaxiale, comprenant les étapes :

a) de formation d'une composition de polyéthylène dans un tube, où la composition de polyéthylène comprend un polyéthylène haute densité (HDPE) bimodal ou multimodal et

b) d'étirement du tube de l'étape a) dans la direction axiale et dans la direction périphérique pour obtenir le tuyau à orientation biaxiale,

dans lequel l'étape b) est réalisée à un rapport d'étirage axial allant de 1,1 à 3,2 et à un rapport d'étirage circonférentiel moyen allant de 1,1 à 1,6 et le tuyau à orientation biaxiale obtenu a un diamètre externe d'au moins 60 mm et une épaisseur de paroi d'au moins 5,5 mm ou

l'étape b) est réalisée à un rapport d'étirage axial allant de 1,1 à 1,7 et à un rapport d'étirage circonférentiel moyen allant de 1,1 à 1,6 et le tuyau à orientation biaxiale obtenu a un diamètre externe inférieur à 60 mm, où le tuyau à orientation biaxiale a un diamètre externe allant de 10 à 40 mm et une épaisseur de paroi allant de 1,5 à 5 mm, et

dans lequel l'étape b) est réalisée à une température d'étirage qui est inférieure de 1 à 30°C au point de fusion de la composition de polyéthylène,

dans lequel la quantité de HDPE par rapport au polyéthylène présent dans la composition de polyéthylène est d'au moins 95% en poids, d'au moins 98% en poids, d'au moins 99% en poids ou de 100% en poids

2. Procédé selon la revendication 1, dans lequel le diamètre externe du tuyau à orientation biaxiale est d'au moins 60 mm et le rapport d'étirage axial est d'au moins 1,2, d'au moins 1,3, d'au moins 1,5 ou d'au moins 1,8 et/ou d'au plus 3,0, d'au plus 2,8 ou d'au plus 2,5.

3. Procédé selon la revendication 1 ou 2, dans lequel le diamètre externe du tuyau à orientation biaxiale est compris entre 60 et 150 mm et une épaisseur de paroi entre 5,5 et 15 mm.

4. Procédé selon la revendication 1, dans lequel le diamètre externe du tuyau à orientation biaxiale est inférieur à 60 mm et le rapport d'étirage axial est d'au moins 1,2, d'au moins 1,3 ou d'au moins 1,5.

5. Procédé selon l'une quelconque des revendications précédentes, dans lequel le HDPE a une densité allant de 940 à 960 kg/m3 mesurée selon la norme ISO1183 et/ou un indice de fluidité allant de 0,1 à 4 g/10 min, plus préférablement de 0,1 à 1 g/10 min, mesuré selon la norme ISO1133-1:2011 (190°C/5 kg).

6. Procédé selon l'une quelconque des revendications précédentes, dans lequel la composition de polyéthylène a un indice de fluidité allant de 0,1 à 4 g/10 min, plus préférablement de 0,1 à 1 g/10 min, mesuré selon la norme ISO1133-1:2011 (190°C/5 kg).

7. Procédé selon l'une quelconque des revendications précédentes, dans lequel la composition comprend en outre 0 à 5% en poids d'additifs et 0 à 40% en poids de charges.

8. Procédé selon l'une quelconque des revendications précédentes, dans lequel l'étape b) est réalisée à une température d'étirage allant de 115 à 123°C.

9. Procédé selon l'une quelconque des revendications précédentes, dans lequel le procédé est un procédé continu.

10. Tuyau à orientation biaxiale obtenu ou pouvant être obtenu par le procédé selon l'une quelconque des revendications précédentes.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5910346 A
- JP 9094867 A
- CA 2457430
- WO 2007003530 A
- US 6325959 B

**Non-patent literature cited in the description**

- **ANDREW PEACOCK.** Handbook of Polyethylene. Dekker, 2000, 43-66
- PE 100 Pipe systems. 16-20
- PE 100 Pipe systems. 35-42
- *PE 100 Pipe systems,* 51-62
- **ALT et al.** Bimodal polyethylene-Interplay of catalyst and process. *Macromol.Symp.,* 2001, vol. 163, 135-143
- **ALT et al.** Bimodal polyethylene-Interplay of catalyst and process. *Macromol.Symp.,* 2001, 163
- PE 100 Pipe systems. 35